## Europäisches Patentamt
## European Patent Office
## Office européen des brevets

(11) Numéro de publication: **0 012 636**
**B1**

# FASCICULE DE BREVET EUROPEEN

(45) Date de publication du fascicule du brevet: **21.12.83**

(51) Int. Cl.³: **B 60 S 1/60**

(21) Numéro de dépôt: **79400824.3**

(22) Date de dépôt: **06.11.79**

(54) Dispositif essuie-vitres pour projecteurs doubles de véhicule automobile.

(30) Priorité: **08.12.78 FR 7834615**

(43) Date de publication de la demande:
**25.06.80 Bulletin 80/13**

(45) Mention de la délivrance du brevet:
**21.12.83 Bulletin 83/51**

(84) Etats contractants désignés:
**DE GB IT SE**

(56) Documents cités:
**DE - B - 2 127 152**
**FR - A - 2 144 242**
**FR - A - 2 160 673**
**FR - A - 2 181 404**
**FR - A - 2 241 969**
**FR - A - 2 245 192**

(73) Titulaire: **REGIE NATIONALE DES USINES RENAULT**
**Boîte postale 103 8-10 avenue Emile Zola**
**F-92109 Boulogne-Billancourt (FR)**

(72) Inventeur: **Sohn, Mireille**
**36, rue Anatole**
**F-78800 Houilles (FR)**

(74) Mandataire: **Ancel, Roger et al,**
**R.N.U.R. S.0804 B.P. 103 8 & 10, avenue Emile Zola**
**F-92109 Boulogne-Billancourt (FR)**

Courier Press, Leamington Spa, England.

Dispositif essuie-vitres pour projecteurs doubles de vehicule automobile

La présente invention se rapporte à un dispositif d'essuyage des vitres des projecteurs d'un véhicule automobile et en particulier des vitres de projecteurs dédoublés assurant séparément les fonctions feux de route et feux de croisement.

Dans le cas de projecteurs doubles placés côte à côte, soit sensiblement dans le même plan, soit dans des plans légèrement décalés dans l'axe du véhicule, on connaît des dispositifs d'essuyage dans lesquels les balais de chaque projecteur sont animés simultanément d'un mouvement angulaire alternatif identique, à partir d'un arbre moteur commun situé dans une zone comprise entre les deux projecteurs d'un même couple (FR—A—2,144,242; FR—A—2,241,969). Dans le cas où les deux projecteurs sont situés dans des plans décalés, il est connu d'entrainer chaque bras d'essuie-vitre par chaque extrémité d'une entretoise bloquée sur l'arbre, de manière que le décalage entre les bras corresponde au décalage entre les vitres (FR—A—2,245,192).

Lorsque le vide existant aux alentours et entre les projecteurs est comblé, pour des raisons d'esthétique, au moyen d'un cache par exemple en matière plastique et/ou par des enjoliveurs entourant les projecteurs, il faut éviter, surtout si la face extérieure bombée des vitres est légèrement encastrée dans le cache, que les balais ne viennent buter contre les parois de ces pièces environnantes, en pratiquant des découpes dans lesdites pièces pour ne pas gêner le balai et réduire le champ du balayage, déjà affecté par la forte courbure des balais d'essuie-projecteurs.

Dans le but de réduire les découpes pratiquées dans les pièces envionnantes (cache, enjoliveurs), voire de les supprimer totalement, au moins pour l'un des projecteurs, la présente invention propose un dispositif essuie-vitres pour projecteurs doubles avec entraînement des balais à partir d'un arbre moteur commun, dans lequel le débattement et donc le champ de balayage de l'un des balais est plus réduit que le débattement de l'autre balai.

Ce résultat est obtenu par le fait que l'arbre—qui par ailleurs entraîne le balai dit à "balayage normal" en prise directe—entraîne le balai dit à "balayage réduit" par l'intermédiaire d'un accouplement à retard de deux pièces montées sur l'arbre, dont l'une possède par exemple un ergot effectuant d'abord une course libre dans la lumière curviligne de l'autre pièce, avant d'entraîner cette dernière en rotation.

Le débattement angulaire de l'ergot dans la lumière correspond au retard à l'entraînement du balai retardé et ainsi à la différence entre les champs de balayage des deux balais respectifs.

Un tel dispositif est intéressant si l'on réserve le balayage normal aux projecteurs des feux de route dont la fonction est jugée prioritaire pour des raisons de sécurité et dont la surface utile de la vitre est supérieure à celle des feux de croisement.

Pour ces derniers, on peut se contenter d'un balayage réduit, dans lequel les balais, fortement cintrés, ne débordent pas de la surface vitrée, en fin de balayage, ce qui évite précisément de devoir pratiquer les découpes susmentionnées.

D'autres particularités de l'invention apparaîtront au cours de la description qui suit d'un mode de réalisation donné à titre d'exemple, en référence au dessin annexé, sur lequel:

— la figure 1 illustre les champs de balayage inégaux du dispositif d'essuyage selon l'invention,
— la figure 2 est une vue en coupe selon la ligne II de la figure 1 du système d'entraînement des balais,
— les figures 3 et 4 montrent les deux pièces de l'accouplement à retard, vues respectivement suivant les flèches III et IV de la figure 2.

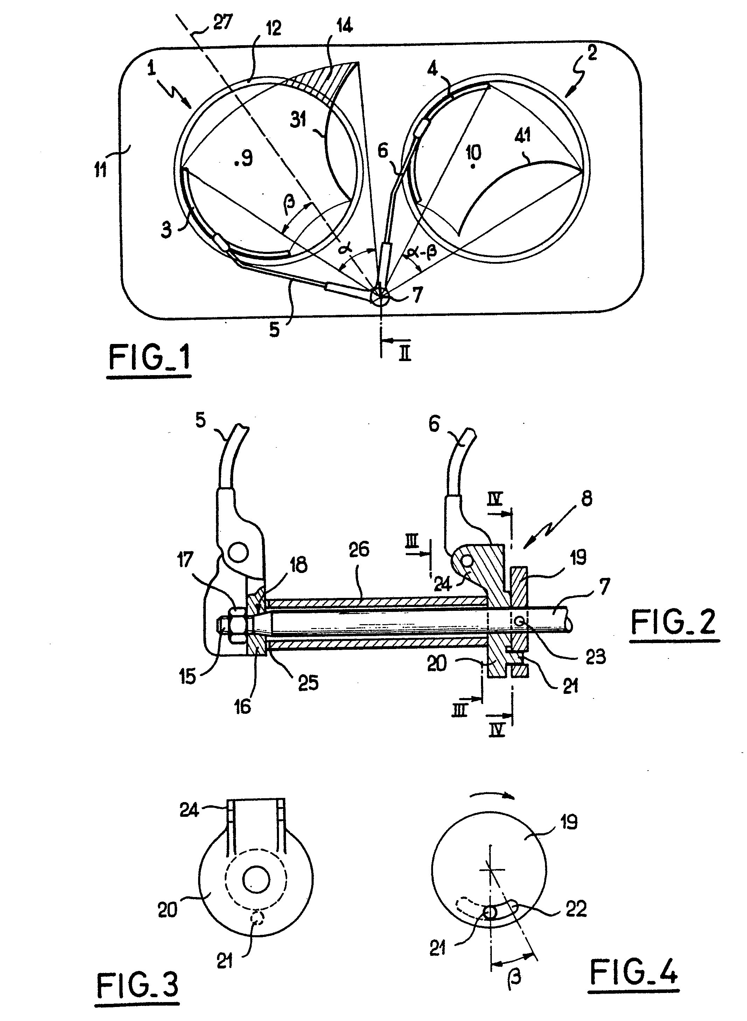

On reconnaît sur la figure 1, vu de l'avant d'un véhicule, un couple de projecteurs dont l'un, 1, celui de gauche, est affecté aux feux de route et l'autre, 2, celui de droite, est réservé aux feux de croisement.

Les projecteurs sont équipés d'un dispositif d'essuyage des vitres comportant essentiellement deux balais, 3, 4, fortement cintrés pour épouser, dans leur position de repos représentée, le contour des projecteurs circulaires entraînés par deux bras 5, 6 montés sur un arbre moteur commun 7 situé dans une zone comprise entre les deux projecteurs voisins.

Le moteur communique aux balais un mouvement circulaire alternatif classique.

Conformément à l'invention, le premier balai 3 (ou son bras) est entraîné directement par l'arbre 7 sur lequel il est bloqué pour effectuer un balayage angulaire $\alpha$, tandis que le second balai 4 est entraîné par l'intermédiaire d'un accouplement retardateur 8 monté sur l'arbre commun 7 de manière à provoquer son départ lorsque le premier balai 3 a déjà effectué la course $\beta$ et à réduire ainsi son champ de balayage d'un valeur angulaire $\beta$ correspondante par rapport au champ $\alpha$ du premier balai.

Comme on le voit sur la figure 1, si l'extrémité du balai 3 du projecteur de route déborde en fin de balayage 31 de la surface vitrée 9, par contre, le balai du projecteur de croisement reste à l'intérieur 41 de la surface vitrée 10, ce qui évite d'avoir à pratiquer une découpe supplémentaire dans les pièces environnantes, telles que le cache 11 ou l'enjoliveur 12, ou de prévoir un déformé en retrait dans lesdites pièces sur la zone hachurée 14. La figure 2 montre en couple l'entraînement des bras 5, 6 des balais, ramenés dans le même plan pour plus de clarté.

Le balai 3 du projecteur de route est monté en prise directe sur l'extrémité de l'arbre moteur 7, pourvu à cet effet d'un embout fileté 15 traversant l'embase 16 du balai et serré par un écrou 17. Le blocage est obtenu par coincement d'une réduction conique 18 de l'arbre dans l'alésage correspondant de l'embase.

L'autre balai 4, dit retardé, est monté sur l'arbre commun par l'intermédiaire d'un accouplement 8 constitué de deux pièces adjacentes dont l'une, 19, solidaire de l'arbre en rotation et en translation, entraîne l'autre, 20, montée librement autour de l'arbre 7 au moyen d'un ergot 21 se débattant dans une lumière curviligne 22.

La réalisation représentée à titre d'exemple utilise pour la première pièce une bague 19 (figure 4) goupillée en 23 sur l'arbre et comportant une lumière curviligne 22 concentrique à l'axe, dont la longueur angulaire β correspond au retard à l'entraînement et à la réduction prédéterminée du champ de balayage.

La seconde pièce de l'accouplement (figure 3) est une autre bague 20 qui porte l'ergot 21 s'engageant dans la lumière de la première pièce, bague comportant en outre une chape 24 pour le montage sur articulation du balai retardé 4.

La pièce 20 supportant le balai retardé est maintenue en translation sur l'arbre 7, entre la bague goupillée 19 et l'embase 16 du balai à entraînement direct, en ménageant toutefois un faible jeu longitudinal pour conserver la libre rotation de la pièce 20 autour de l'arbre.

Comme représenté sur la figure 2, il est possible d'intercaler entre les deux balais, en respectant le jeu précédent 25, une entretoise tubulaire 26 enfilée sur l'arbre, de longueur correspondant au décalage existant éventuellement entre les vitres des deux projecteurs 1, 2, dans l'axe du véhicule.

Le fonctionnement du dispositif est simple. En partant de la position de repos des deux balais de la figure 1, lorsque l'arbre moteur 7 effectue la phase aller de son mouvement alternatif, le balai "direct" 3 est entraîné immédiatement, ainsi que la bague 19 qui pivote d'un angle β correspondant à la longueur curviligne de sa lumière 22.

Lorsque la lumière arrive en butée sur l'ergot 21 (position pointillée de la figure 4), ce qui correspond à la position 27 du balai 3 (figure 1), l'accouplement réalisé entre les deux bagues provoque l'entraînement du balai "retardé" 4 qui termine son balayage en même temps que le premier balai.

Ainsi, lorsque l'arbre 7 et le balai "direct" 3 débattent de α, le balai retardé 4 débat de (α−β), conformément à l'invention. La phase retour du mouvement de l'arbre exécute les mêmes opérations, mais dans l'ordre inverse.

L'invention n'est pas limitée à l'exemple de réalisation représenté, mais englobe tous les équivalents techniques simples procurant un résultat identique, notamment pour l'accouplement à retard, dont la lumière et l'ergot peuvent être portés indifféremment par l'une ou l'autre des bagues en présence.

**Revendications**

1. Dispositif d'essuyage des vitres des projecteurs doubles (1, 2) d'un véhicule automobile, comprenant deux balais (3, 4) décalés angulairement et entraînés selon un mouvement circulaire alternatif sur un arbre moteur commun (7) situé dans une zone comprise entre les deux projecteurs voisins (1, 2), caractérisé en ce que l'un des balais (3) est entraîné directement par l'arbre (7) sur l'extrémité duquel il est monté, tandis que l'autre balai (4) est entraîné par l'intermédiaire d'un accouplement à retard (8) monté sur l'arbre commun (7) de manière à provoquer le retard à l'entraînement du second balai (4) et à réduire ainsi son champ de balayage par rapport au champ du premier balai (3).

2. Dispositif selon la revendication 1, caractérisé en ce que l'accouplement à retard (8) comprend deux pièces adjacentes dont l'une (19), solidaire de l'arbre (7) en rotation et en translation, entraîne l'autre pièce (20) au moyen d'un ergot (21) se débattant dans une lumière curviligne (22) d'une valeur angulaire (β) correspondant à la réduction prédéterminée du champ de balayage (α) du premier balai (3).

3. Dispositif selon la revendication 2, caractérisé en ce que la première pièce (19) de l'accouplement est goupillée (23) sur l'arbre (7) et comporte la lumière curviligne (22) et en ce que la seconde pièce (20) est munie de l'ergot (21) s'engageant dans la lumière et comporte une chape (24) pour le montage articulé du balai retardé (4).

4. Dispositif selon les revendications 1 à 3, caractérisé en ce que la pièce (20) supportant le balai retardé est montée librement autour de l'arbre moteur (7) et est maintenue en translation sur cet arbre, avec un faible jeu entre la première pièce (19) de l'accouplement et l'embase (16) du balai à entraînement direct bloqué en bout d'arbre.

5. Dispositif selon la revendication 4, caractérisé en ce que les deux balais (3, 4) sont en outre décalés dans la direction de l'arbre moteur (7) par l'intermédiaire d'un entretoise (26) montée autour de l'arbre avec jeu en translation (25).

6. Dispositif selon la revendication 1, caractérisé en ce que le balai à entraînement direct (3) est réservé à l'essuyage du projecteur de feux de route (1), tandis que le balai retardé (4) est réservé à l'essuyage du projecteur de feux de croisement (2).

**Patentansprüche**

1. Scheibenwischervorrichtung für Doppelscheinwerfer (1, 2) eines Kraftfahrzeugs, die zwei Wischer (3, 4) einschliesst, die in einem Winkel versetzt und in abwechselnder, kreisförmiger Bewegung auf einer gemeinsamen Motorwelle (7) angetrieben werden, die an einem Platz zwischen den beiden beieinander liegenden Scheinwerfern (1, 2) vorgesehen ist, dadurch gekennzeichnet, dass einer der Wischer (3) direkt durch die Welle getrieben wird, an deren Ende er angebracht ist, während der andere Wischer durch eine Verzögerungsverbindung (8) angetrieben wird, die auf der gemeinsamen Welle (7) auf solche Weise befestigt ist, dass der Antrieb des zweiten Wischers (4) verzögert wird und somit das Wischfeld im Verhältnis zu dem Wischfeld des ersten Wischers (3) reduziert wird.

2. Vorrichtung gemäss Anspruch 1, dadurch gekennzeichnet, dass die Verzögerungsverbindung (8) zwei nebeneinander liegende Stücke einschliesst, von denen das eine Stück (19), das integral mit der Welle (7) in der Umdrehung und in der Transmission ist, das andere Stück (20) durch einen Fortsatz (21) antreibt, der sich in einer kurvenförmigen Öffnung (22) bewegt, die eine Winkelgrösse (β) hat, welche der vorher festgelegten Reduzierung des Wisch-feldes (α) des ersten Wischers (3) entspricht.

3. Vorrichtung gemäss Anspruch 2, dadurch gekennzeichnet, dass das erste Stück (19) der Verbindung auf der Welle (7) verbolzt (23) ist und die kurvenförmige Öffnung (22) enthält, und dadurch, dass das zweite Stück (20) mit dem Fortsatz (21) versehen ist, der in die Öffnung eingreift und einen Halteteil (24) für eine angelenkte Verbindung des verzögerten Wischers (4) einschliesst.

4. Vorrichtung gemäss Anspruch 1 bis 3, dadurch gekennzeichnet, dass das Stück (20), welches den verzögerten Wischer trägt, frei beweglich um die Motorwelle (7) befestigt ist und in Transmission um die genannte Welle mit begrenztem Spiel zwischen dem ersten Stück (19) der Verbindung und dem Sitz (16) des direkt getriebenen Wischers gehalten wird, der am Ende der Welle fest angebracht ist.

5. Vorrichtung gemäss Anspruch 4, dadurch gekennzeichnet, dass die beiden Wischer (3, 4) auch in Richtung der Motorwelle (7) durch einen Querriegel (26) versetzt sind, der um die Welle mit Spiel in der Transmission (25) angebracht ist.

6. Vorrichtung gemäss Anspruch 1, dadurch gekennzeichnet, dass der direkt angetriebene Wischer (3) für das Abwischen des Fernscheinwerfers (1) reserviert ist, während der verzögerte Wischer (4) für das Abwischen des abgeblendeten Scheinwerfers (2) reserviert ist.

**Claims**

1. Wiper device for double headlights (1, 2) of an automobile, comprising two wiper means (3, 4), angularly displaced and driven in an alternate circular movement on a common motor shaft (7), placed in an area which is comprised between the two adjacent headlights (1, 2), characterized in that one of the wiper means (3) is driven directly by shaft (7), on the one end of which it is mounted, whereas the other wiper means (4) is driven by means of a retarding coupling (8) which is fixed on the common shaft (7) in such a way as to retard the driving of the second wiper means (4) and thus to reduce its field of wiping with respect to the field of the first wiper means (3).

2. Device according to claim 1, characterized in that the retarding coupling (8) comprises two adjacent pieces, one of which (19), integral with the shaft (7) in rotation and in transmission, drives the other piece (20) by means of a lug (21) which moves in a curved opening (22), having an angular value (β) which corresponds to the predetermined reduction of the field of wiping (α) of the first wiper means (3).

3. Device according to claim 2, characterized in that the first piece (19) of the coupling is pinned (23) on the shaft (7) and comprises the curved opening (22), and in that the second piece (20) is provided with the lug (21), engaging into the opening and comprising a holding part (24) for the pivoted mounting of the retarded wiper means (4).

4. Device according to claims 1 to 3, characterized in that the piece (20) which carries the retarded wiper means, is mounted freely around the motor shaft (7) and is maintained in transmission around said shaft with a limited play between the first piece (19) and the coupling and the support (16) of the directly driven wiper means which is locked at the end of the shaft.

5. Device according to claim 4, characterized in that the two wiper means (3, 4) are also displaced in the direction of the motor shaft (7) by means of a cross-piece (26) which is mounted around the shaft with play in transmission (25).

6. Device according to claim 1, characterized in that the directly driven wiper means (3) is reserved for wiping the high beam headlight (1), whereas the retarded wiper means (4) is reserved for wiping the low beam headlight (2).

**0 0 12 636**

FIG_1

FIG_2

FIG_3

FIG_4